Europäisches Patentamt

European Patent Office

Office européen des brevets

(11) Publication number : **0 620 272 A2**

## EUROPEAN PATENT APPLICATION

(21) Application number : **94302434.9**

(22) Date of filing : **06.04.94**

(51) Int. Cl.⁵ : **C12H 1/14,** C12C 7/14

(30) Priority : **08.04.93 US 44517**

(43) Date of publication of application :
**19.10.94 Bulletin 94/42**

(84) Designated Contracting States :
**CH DE DK ES FR GB IT LI NL**

(71) Applicant : **MERCK & CO. INC.**
**126, East Lincoln Avenue**
**P.O. Box 2000**
**Rahway New Jersey 07065-0900 (US)**

(72) Inventor : **Winwood, Robert J.**
**115 Woodside Wigmore**
**Gillingham, Kent ME8 0PW (GB)**
Inventor : **Gibson, William**
**15 Bunting Close**
**Horsham, West Sussex RH13 5PA (GB)**
Inventor : **Wolf, Carol L.**
**7285 Galabria Court No. 12**
**San Diego, California 92122 (US)**

(74) Representative : **Cole, William Gwyn et al**
**European Patent Department**
**Merck & Co., Inc.**
**Terlings Park**
**Eastwick Road**
**Harlow Essex CM20 2QR (GB)**

(54) **A process for clarifying a beverage.**

(57) We have found that gellan gum can be used as a fining agent for beer and wine manufacturing processes. Gellan gum can be used for clarifying beer prior to fermentation. Gellan gum can also be used for fining matured beer or wine, either prior to or during final packaging in bottles, cans or barrels.

EP 0 620 272 A2

## BACKGROUND OF THE INVENTION

The greater part of the haze in fermentation products such as beer and wine is removed by conventional means, but perfect clarity requires an auxiliary fining agent. The removal of proteinaceous material from beer, wines and fortified wines is obtained by fining and/or filtration processes. Fining agents are used to associate with the protein and form a precipitate which rapidly falls to the bottom of the storage vessel as a dense floc which can then be removed. There are 2 stages where fining agents may be used: (1) prior to fermentation and (2) after maturation.

Beer, for example, can be clarified and stabilized by treating it with a carrageenan solution before carbonation. Carrageenan, a seaweed extract that will naturally vary in performance, precipitates the nitrogenous bodies that cause cloudiness and turbidity, so that they can be filtered in the normal way.

Sodium alginate has also found an important use in this field, where its convenience in handling and low cost mean only a low additional expense in producing a brilliant beer, also known as "bright" beer. The use of sodium alginate for clarification of wine has been investigated extensively. It has been shown that removal of not only the tannins and coloring materials but also nitrogenous substances, as evidenced by the decrease in total nitrogen in the wine, can be achieved by treatment with sodium alginate. The mechanism of the reaction appears to be due to the hydrolysis of sodium alginate in the highly acidic wine to give sodium ions and an insoluble precipitate of alginic acid salts of iron and copper.

Isinglass, a collagen based material derived from the swim bladder of the sturgeon, is an effective fining agent in beer manufacture. However, Isinglass is very expensive and the supply is quite limited.

## SUMMARY OF THE INVENTION

We have found that gellan gum can be used as a fining agent for beer and wine manufacturing processes. Gellan gum can be used for clarifying beer prior to fermentation. Gellan gum can also be used for fining matured beer or wine, either prior to or during final packaging in bottles, cans or barrels.

Preferably, gellan gum is used at a concentration level of 1.0 ppm to 100 ppm in either the prefermented liquid or the fermented beer or wine product. Also preferably, a 0.1% gellan gum solution is prepared in 0.05% sodium citrate stock solution made with deionized water, in order to prehydrate the gum.

## DETAILED DESCRIPTION OF THE INVENTION

Gellan gum is a heteropolysaccharide prepared by fermentation of Pseudomonas elodea ATCC 31461. Aptly, the gellan gum employed in the present invention is low acetyl gellan gum, the term 'low acetyl gellan gum' as used herein denotes a level of acetylation of 0.3-0% by weight. Gellan gum is available from Kelco Division of Merck & Co., Inc., under various names, including KELGOGEL, KELCOGEL PC, and KELCOGEL F. Processes for preparing gellan gum include those described in United States Patents 4,326,052 and 4,326,053. Gellan gum is a food ingredient manufactured by a controlled fermentation process, thus allowing a consistent high quality supply.

It is useful for a variety of gelling, texturizing, stabilizing and film forming applications, particularly as a gelling agent in foods, personal care products and industrial applications. KELCOGEL PC consists of 80% KELCOGEL F fine mesh gellan gum and 20% fine mesh sodium citrate.

### Wine and Beer Making

Typical starting materials for wine production include nearly any ripe fruit or vegetable extract which contains 12 to 30 percent sugar in the juices. Fermentation is accomplished either with wild yeast, present on the grape or fruit skins, or with inoculated selected yeast cultures and pasteurized fruit juices.

Yeast inoculum is first grown to desired size in the juice under aerobic conditions, generating more cells as well as carbon dioxide; subsequent fermentation to yield ethanol solutions and further carbon dioxide is carried out anaerobically. Acids produced during fermentation are degraded by bacteria in postfermentation stages, creating the characteristic bouquet of the wine. The type of wine produced is determined by the fruit used (grape variety, apricots, peaches, etc.), the yeast and bacterial strains involved, possible subsequent fortification, i.e., adding alcohol, and the series of mechanical and heating, cooling, and aging processes before bottling.

Typical starting materials for beer production include barley, which is incubated for 2 to 6 days so that germination occurs. This inclubation step, called *malting*, promotes the formation of active $\alpha$ and $\beta$-amylases as well as protease enzymes. The resulting grains are then carefully dried. The product of the malting process is frequently referred to as *malt*.

Preparation of a nutrient medium called *beer wort*, to which yeast is added and grown, requires *mashing*. Mashing is a carefully controlled warming of an aqueous mixture of malt and fermentable carbohydrates, including those in starch, glucose syrup, etc. Typical brewery beer worts include about 90% malt and about 10% brewing sugars, although ratios of these ingredients vary depending on the type of final beer product desired. Success of the mashing step requires artful exploitation of a complex mixture of substrates and enzymes. Proteins and carbohydrates in the malt-carbohydrate mixture must be hydrolyzed, since the yeast involved in the fermentation step can utilize only simple sugars and amino acids as nutrients. Total hydrolysis is not desirable, however, because dextrins, peptides, and peptones contribute flavor and body to the beer. Complicating the situation are the characteristics of the hydrolytic enzymes which participate in mashing. Elaborate cooking recipes with temperatures varying with time over a range from about 40 to 100°C are employed to optimize the complex mashing process.

Typically, two separate mashes are prepared. One, containing malt and water, is heated, e.g. at 40°C for 1 hour. Another, containing malt, adjuncts, and water, is incrementally heated over 40 minutes starting at 45°C and increasing to 100°C. The mashes are combined and heated, e.g. at 70°C for 20 minutes. The temperature is then raised slightly and maintained for an additional period of time. Afterwards, the heated mash is cooled. The end product contains a suitable mixture of yeast nutrients and flavor components.

Next, the beer wort is clarified, to remove multimolecular aggregates such as proteins and polyphenols which form during mashing, and then boiled for about 2 hours with periodic addition of *hops*, ripened, dried cones of the hop vine, which contribute flavor, aroma, and color to the beer and also exert an antibacterial action. Wort boiling is another method for precipitating formed multimolecular aggregates. It is typical for beer producers to add carrageenan at this stage to enhance precipitation. This stage is called *copper fining*.

The sterilized wort is next cooled and inoculated with brewers' yeast *(Saccharomyces cerevisiae* for "top fermented" beers, *Saccharomyces carlsburgensis* for "bottom fermented" beers). As in wine making, the yeast is first cultivated under aerobic conditions followed by a switch to an anaerobic environment to cause ethanol and $CO_2$ production. Finally the product is optionally clarified, pasteurized, aged, and packaged. These optional last steps are commonly used for large-scale beer production.

According to the present invention, gellan gum is useful during various stages of beer production, and during typical clarification stages of wine production, to effect clarification of the resulting beer or wine. Gellan gum can be added prior to fermentation (e.g. prior to beer wort boiling, during beer wort boiling) or following fermention (during maturation). Gellan gum can be used as the sole clarifying agent or in conjunction with other clarifying agents, such as isinglass or gelatin. When used as an adjunct with isinglass, gellan gum actually improves the action of isinglass.

One embodiment of the invention is a process for making a fermented malt beverage comprising the steps of forming a malt- and carbohydrate-containing beer wort; adding a gellan gum solution to the beer wort to clarify the beer wort, wherein the amount of gellan gum relative to the beer wort is between 1.0 ppm and 100 ppm; boiling the beer wort; cooling the beer wort and inoculating with brewers' yeast; and fermenting the beer wort to obtain the fermented malt beverage. Optionally, carrageenan may also be additionally added to the beer wort, to clarify the beer wort, prior to boiling the beer wort.

Another embodiment of the invention is a process for making a fermented malt beverage comprising the steps of forming a malt- and carbohydrate-containing beer wort; boiling the beer wort; cooling the beer wort and inoculating with brewers' yeast; fermenting the beer wort to obtain the fermented malt beverage; and adding a gellan gum solution to the fermented malt beverage to clarify the fermented malt beverage, wherein the amount of gellan gum relative to the fermented malt beverage is between 1.0 ppm and 100 ppm. Optionally, isinglass and/or gelatin can be additionally added to the fermented malt beverage, to clarify the fermented malt beverage.

Another embodiment of the invention is a process for making a fermented malt beverage comprising forming a malt- and carbohydrate-containing beer wort; boiling the beer wort; adding a gellan gum solution to the beer wort during the boiling step, wherein the amount of gellan gum relative to the beer wort is between 1.0 ppm and 100 ppm; cooling the beer wort and inoculating with brewer's yeast; and fermenting the beer wort to obtain the fermented malt beverage. Optionally, carrageenan can be additionally added to the beer wort during the boiling step.

Another embodiment of the invention is a fermentable beer wort comprising malt, carbohydrates, and 1.0 ppm to 100 ppm gellan gum.

Another embodiment of the invention is a process for making wine comprising obtaining a first extract, from ripe fruit, containing between about 8-35 percent fermentable sugars; inoculating the extract with yeast culture; fermenting the extract to produce wine; and adding a gellan gum solution to the wine to clarify the wine, wherein the amount of gellan gum relative to the wine is between 1.0 ppm and 100 ppm.

## EXAMPLE 1

Standard beer (lager style, bottom fermented) was brewed using a "Boots" home brew kit (Boots plc, Nottingham, England). The beer was decanted into 8 x 1 liter measuring cylinders. The measuring cylinders were prepared as follows:

1. Control.
2. Add 3.5 $cm^3$ of isinglass solution (Boots plc, Nottingham, England) (pre-dispersed in 40 $cm^3$ of the beer).
3. Add 7 $cm^3$ of isinglass solution (otherwise as 2).
4. Add 5 $cm^3$ of 0.18% MANUCOL LB (pre-dispersed in 40$cm^3$ beer).
5. As 2, except 5 $cm^3$ of 0.18% MANUCOL LB added prior to isinglass addition.
6. Add 2.2 $cm^3$ of Boots Fining Gel (Boots plc, Nottingham, England) (chitosan solution).
7. Add 10 $cm^3$ of 0.1% KELCOGEL gellan gum solution in 0.05% sodium citrate solution.
8. As 7, then add 3.5 $cm^3$ of isinglass solution.

MANUCOL LB is a trade mark of Kelco Division of Merck & Co., Inc for sodium alginate. Measuring cylinders were covered by cling film and set aside at ambient temperature.

After 90 minutes, cylinders 7 and 8 had clarified with 80-100 $cm^3$ of sediment in the bottom.

**Table 1**

| Cylinder observations | | |
|---|---|---|
| Cylinder | Visual Clarity | Optical Density |
| 1 | Slight haze | 0.162 |
| 2 | Clear | 0.152 |
| 3 | Clear | 0.165 |
| 4 | Hazy | 0.197 |
| 5 | Clear | 0.150 |
| 6 | Slight haze | 0.175 |
| 7 | Clear | 0.148 |
| 8 | Clear | 0.145 |

Optical density was measured in 1 cm cell at 450 $\mu$m. The optical density before setting was 0.21.

Gellan gum effected rapid clarification of beer.

## EXAMPLE 2

Gellan gum was used as described in Example 1, except sodium citrate was added as a 0.05% solution. Unclarified beer, stored at 4-5°C, was re-mixed and dosed with various levels of gellan gum solution. The appropriate quantity of 0.10% KELCOGEL solution in 0.05% sodium citrate solution was stirred into 1 liter of unclarified lager for three minutes, then transferred to a 1 liter measuring cylinder for settling. The cylinders were visually observed over a 2 1/2 hour period. A control with no additive, and one with one level of sodium citrate alone, were also prepared.

### Table 2

| Cylinder observations at various setting times | | | | |
|---|---|---|---|---|
| | 40-45 mins | 1-1 1/2 hours | 2-2 1/2 hours | 2 1/2 days |
| 1. Control-no additives | No change | No change | Clearing | Clearing |
| 2. 1ppm KELCOGEL + 0.5ppm Na Cit. | No change | Small flocs | Settling 5 $cm^3$ | 10 $cm^3$ |
| 3. 2ppm KELCOGEL + 1ppm Na Cit. | No change | Small flocs | Settling 15 $cm^3$ | 15 $cm^3$ |
| 4. 4ppm KELCOGEL + 2ppm Na Cit. | Small flocs | Even dist. of flocs 30 $cm^3$ | Settling 30 $cm^3$ | 30 $cm^3$ |
| 5. 8ppm KELCOGEL + 4ppm Na Cit. | Flocs, clearing | Fewer flocs suspended 80 $cm^3$ | Settling 80 $cm^3$ | 80 $cm^3$ |
| 6. 10ppm KELCOGEL + 5ppm Na Cit. | Flocs, clearing | Fewer flocs suspended 110 $cm^3$ | Settling 100 $cm^3$ | 30 $cm^3$ |
| 7. 20 ppm KELCOGEL + 10ppm Na Cit. | Large flocs,top 50ml class | Fewer flocs suspended 150 $cm^3$ | Settling 120 $cm^3$ | 90 $cm^3$ |
| 8. *10ppm KELCOGEL + 5ppm Na Cit. | Small flocs | Less flocs than No. 6 | Less flocs than No.6 | Less flocs than No. 6 |
| 9. Control + 5ppm Na Cit. | No change | No change | No change | Trace |

Gellan gum at concentrations as low as 1ppm accelerate floculation in beer. At 10 ppm concentration gellan gum effects clarification in less than 2 1/2 hours, but further time is necessary for compaction of the sludge bed. Up to 5 ppm sodium citrate appears to have no effect.

### EXAMPLE 3

Unclarified, traditional bitter ale was supplied by King and Barnes Brewery (Horsham, United Kingdom). A 0.1% gellan gum stock solution with 0.05% sodium citrate was prepared by heating to 70°C and cooling. A standard isinglass solution (@ 32% solids) was also used in this example.

1 liter of beer was dosed with various levels of isinglass, or KELCOGEL solution, in 1 liter measuring cylinders, and set aside at ambient temperature to observe settling.

## Table 3
## Cylinder observations with various additives at various setting times

| Sample No. | 1 | 2 | 3 | 4 | 5 | 6 | 7 | 8 |
|---|---|---|---|---|---|---|---|---|
| Additive | none | <-------Isinglass-------> | | | <--0.1% KELGOGEL in--> 0.05% sodium citrate | | | |
| Volume added (ml) | - | 5 | 10 | 15 | 5 | 10 | 15 | 20 |
| after 40 mins | No change through-out. | Small flocs Setting | Med. flocs 30ml sed. | Med. flocs | Visible flocs No sed. | As 5 | Lg. flocs floating to give 30ml raft | |
| after 1 1/2 hours | To 10ml clear | 20ml sed. | 30ml sed. Beer bright with suspended flocs | 30ml sed. Beer bright with suspended flocs | 20ml sed. Beer hazy | 20ml sed. Beer hazy | 30ml raft. Beer hazy but 8 better than 7 & poorer than 3 or 4 | |

## Table 3 (continued)
## Cylinder observations with various
## additives at various setting times

| Sample No. | 1 | 2 | 3 | 4 | 5 | 6 | 7 | 8 |
|---|---|---|---|---|---|---|---|---|
| Additive | none | <-------Isinglass-------> | | | <--0.1% KELGOGEL in--> 0.05% sodium citrate | | | |
| Volume added (ml) after 18 hours | - | 5 | 10 | 15 | 5 | 10 | 15 | 20 |
| | No change | 10ml sed. flocs sticking to vessel wall | 15ml sed. flocs sticking to vessel wall | 20ml sed. flocs sticking to vessel wall | 20ml sed. Beer hazy | 20ml sed. Less hazy than 5 | 20ml sed. Less hazy than 6 | 25ml sed. Less hazy than 7, not as bright as 3 or 4 |

(sed. = sediment)

Brightness and clarity improved from 5 to 8. Raft on 6, 7 and 8, when agitated lightly, began to settle.

## Claims

1. A process for making a fermented malt beverage comprising:
   a) forming a malt- and carbohydrate-containing beer wort;
   b) adding a gellan gum solution to the beer wort to clarify the beer wort, wherein the amount of gellan gum relative to the beer wort is between 1.0 ppm and 100 ppm;
   c) boiling the beer wort;
   d) cooling the beer wort and inoculating with brewers' yeast; and
   e) fermenting the beer wort to obtain the fermented malt beverage.

2. A process of claim 1 which comprises adding carrageenan to the beer wort, to clarify the beer wort, prior to boiling the beer wort.

3. A process for making a fermented malt beverage comprising:
   a) forming a malt- and carbohydrate-containing beer wort;
   b) boiling the beer wort;
   c) cooling the beer wort and inoculating with brewers' yeast;
   d) fermenting the beer wort to obtain the fermented malt beverage; and
   e) adding a gellan gum solution to the fermented malt beverage to clarify the fermented malt beverage, wherein the amount of gellan gum relative to the fermented malt beverage is between 1.0 ppm and 100 ppm.

4. A process of claim 3 which comprises adding isinglass to the fermented malt beverage, to clarify the fermented malt beverage.

5. A process of claim 3 which comprise adding gelatin to the fermented malt beverage, to clarify the fermented malt beverage.

6. A process for making a fermented malt beverage comprising:
   a) forming a malt- and carbohydrate-containing beer wort;
   b) boiling the beer wort;
   c) adding a gellan gum solution to the beer wort during the boiling step, wherein the amount of gellan gum relative to the beer wort is between 1.0 ppm and 100 ppm;
   d) cooling the beer wort and inoculating with brewer's yeast; and
   e) fermenting the beer wort to obtain the fermented malt beverage.

7. A process of claim 6 which comprises adding carrageenan to the beer wort during the boiling step.

8. A fermentable beer wort comprising malt, carbohydrates, and 1.0 ppm to 100 ppm gellan gum.

9. A process for making wine comprising:
   a) obtaining a first extract, from ripe fruit, containing between about 8-35 percent fermentable sugars;
   b) inoculating the extract with yeast culture;
   c) fermenting the extract to produce wine; and
   d) adding a gellan gum solution to the wine to clarify the wine, wherein the amount of gellan gum relative to the wine is between 1.0 ppm and 100 ppm.

10. Gellan gum for use in the clarification of a fermented malt beverage or wine.